Europäisches Patentamt

European Patent Office

Office européen des brevets

(11) Veröffentlichungsnummer: **0 174 587**
A2

# (12) EUROPÄISCHE PATENTANMELDUNG

(21) Anmeldenummer: 85111084.1

(22) Anmeldetag: 03.09.85

(51) Int. Cl.⁴: **G 03 C 1/74**
G 03 C 1/02, H 05 B 6/78
B 01 J 19/12

(30) Priorität: 13.09.84 DE 3433580

(43) Veröffentlichungstag der Anmeldung:
19.03.86 Patentblatt 86/12

(84) Benannte Vertragsstaaten:
BE CH DE FR GB LI

(71) Anmelder: AGFA-GEVAERT Aktiengesellschaft

D-5090 Leverkusen 1(DE)

(72) Erfinder: Koepke, Günther, Dr.
Zum Hahnenberg 41
D-5068 Odenthal(DE)

(72) Erfinder: Frenken, Hans, Dipl.-Ing.
Am Berg 23
D-5068 Odenthal(DE)

(72) Erfinder: Friedsam, Josef
Götscherweg 49
D-4018 Langenfeld(DE)

(54) **Verfahren und Vorrichtung zum Aufschmelzen von erstarrten Gelmassen, insbesondere von fotografischen Emulsionen.**

(57) Ein Verfahren und eine Vorrichtung zum Aufschmelzen von erstarrten Gelmassen, insbesondere von fotografischen Emulsionen, die in Feststoff-Formen beliebiger Gestalt in einen mit einer Temperiervorrichtung ausgestatteten Aufschmelzbehälter mit einem Öffnungen aufweisenden Boden eingebracht werden, wobei die Gelmasse nach dem Aufschmelzen durch die Öffnungen des Bodens in einen darunter angeordneten Auffangbehälter fließt, sind zur Vermeidung höherer Temperaturbelastungen für die Gelmasse derart gestaltet, daß die unmittelbar über dem Boden des Aufschmelzbehälters angeordnete Schicht der Gelmasse mittels Mikrowellen geschmolzen wird und die darüberliegenden Schichten der Gelmasse von der Mikrowellenstrahlung weitgehend unbeeinflußt bleiben.

./...

EP 0 174 587 A2

Croydon Printing Company Ltd.

FIG. 1

0174587

AGFA-GEVAERT
Aktiengesellschaft                    D 5090 Leverkusen 1
Patentabteilung                       Hie/by-c


Verfahren und Vorrichtung zum Aufschmelzen von erstarrten
Gelmassen, insbesondere von fotografischen Emulsionen

Die Erfindung betrifft ein Verfahren und eine Vorrichtung
zum Aufschmelzen von erstarrten Gelmassen, insbesondere
von fotografischen Emulsionen, die in Feststoff-Formen
beliebiger Gestalt in einen mit einer Temperiervorrichtung ausgestatteten Aufschmelzbehälter mit einem
Öffnungen aufweisenden Boden eingebracht werden, wobei
die Gelmasse nach dem Aufschmelzen durch die Öffnungen
des Bodens in einen darunter angeordneten Auffangbehälter fließt.

In konventioneller Weise wurde hierfür bisher ein
Schmelzkessel verwendet, der aus einem Behälter mit
Rührwerk und einem Temperiermantel bestand. Hierbei
wurde das Schmelzgut in den Behälter eingebracht und
unter Rühren erwärmt, wozu der Temperiermantel mit
einem geeigneten Wärmeträger, vorzugsweise Dampf oder
Warmwasser, beschickt wurde. Der Temperaturübergang
vom Wärmeträger auf das Schmelzgut erfolgte lediglich
durch Konvektion. Um einen befriedigenden Wärmeübergang

AG 1983

zu erreichen, mußte die gesamte erstarrte Masse mit einem leistungsstarken Rührwerk mit entsprechendem Energiebedarf umgewälzt werden. Der Energiebedarf war umso höher, als bei empfindlichen Materialien, wie z.B. fotografischen Emulsionen und Lebensmitteln, einerseits der Behälter des Schmelzkessels aus Edelstahl hergestellt werden mußte und andererseits gerade Edelstahl eine sehr niedrige Wärmeleitzahl aufweist.

Selbst unter Einsatz optimaler Technik ergaben sich hierbei gravierende Einflüsse auf das zu schmelzende Produkt. Soll eine kurze Aufschmelzzeit erreicht werden, muß ein großer Temperaturgradient von der Behälterwand zum Schmelzgut anliegen. Dabei wird das Schmelzgut, in unzulässiger Weise thermisch belastet, was z.B. bei fotografischen Emulsionen zur Schleierbildung und Beeinflussung der Sensibilisierung führt. Wird jedoch zur Verringerung des Temperaturgradienten die Manteltemperatur in der Nähe oder gleich der Endtemperatur des verflüssigten Produktes gehalten, muß eine längere Verweilzeit des Produktes bei dieser Temperatur in Kauf genommen werden. Dies kann bei fotografischen Emulsionen zur Nachdigestion und damit zur Veränderung der fotografischen Eigenschaften führen. Abgesehen davon konnte eine vernünftige Energienutzung nur bei Chargenbetrieb ermöglicht werden.

Aus der DE-OS 24 32 556 ist es auch schon bekannt, fotografische Emulsionen im Chargen- und kontinuierlichen Betrieb mittels eines im Aufschmelzbehälter angeordneten Heizrostes vorzunehmen. Hierbei kann jedoch eine gleichbleibende Aufschmelzleistung nur er-

AG 1983

reicht werden, wenn die erstarrte Emulsion relativ klein strukturiert ist, damit die Ausbildung größerer Hohlräume zwischen den einzelnen Brocken oder sonstigen Erstarrungskörpern der Emulsion und hierdurch bedingte unterschiedliche Beaufschlagung der verfügbaren Wärmeaustauschfläche vermieden werden.

Ähnlich verhält es sich bei der Aufschmelzvorrichtung nach der DD-PS 158 529 mit schrägstehenden Heizrosten. Dort besteht auch noch die Gefahr, daß die geschmolzene Emulsion vor dem Abfließen am Heizgitternetz vorübergehend haften bleibt und sich dabei bis zur Temperatur des Heizgitters aufheizt, was zu einer erheblichen thermischen Belastung der Emulsion mit den vorbeschriebenen Nachteilen führt.

Der Erfindung liegt die Aufgabe zugrunde, ein Verfahren und eine Vorrichtung der eingangs genannten Art so auszubilden, daß das erstarrte Schmelzgut in beliebigen Feststoff-Formen zugeführt werden kann und trotzdem die thermische Belastung des Schmelzgutes auch bei kontinuierlichem Betrieb äußerst gering bleibt.

Diese Aufgabe wird erfindungsgemäß gelöst durch die Merkmale des Hauptanspruchs. Weitere vorteilhafte Merkmale der Erfindung sind den Unteransprüchen entnehmbar.

Dadurch, daß die Einwirkung der für den Schmelzvorgang verwendeten Mikrowellenenergie auf die unterste Schicht im Aufschmelzbehälter konzentriert wird und diese

AG 1983

Energie nur ca. 10 mm in das ungeschmolzene Material eindringt, ergibt sich der Vorteil einer extrem niedrigen thermischen Belastung des Materials bei der Aufschmelzung.

Das geschmolzene Material wird weder überhitzt noch bleibt es zu lange in der Energiezone der Aufschmelzvorrichtung.

Weitere Vorteile ergeben sich aus der nachfolgenden Beschreibung der Erfindung.

Eine Ausführungsform der Erfindung wird anhand von Zeichnungen näher erläutert. Es zeigen:

Fig. 1    die erfindungsgemäße Aufschmelzvorrichtung im Längsschnitt,

Fig. 2    den Gegenstand von Fig. 1 im Schnitt längs der Linie 2-2 in verkleinertem Maßstab,

Fig. 3    einen Ausschnitt aus Fig. 1 in vergrößertem Maßstab.

Der in den beigefügten Zeichnungen dargestellte Aufschmelzbehälter 1 weist einen quadratischen Querschnitt auf. Seine Mantelflächen 2 bestehen aus Edelstahl. Der Behälter besitzt einen Bodenflansch 3 und einen Deckelflansch 4, an den mittels des Scharniers 5 ein Deckel 6 schwenkbar angelenkt ist. Am unteren Ende des Auf-

AG 1983

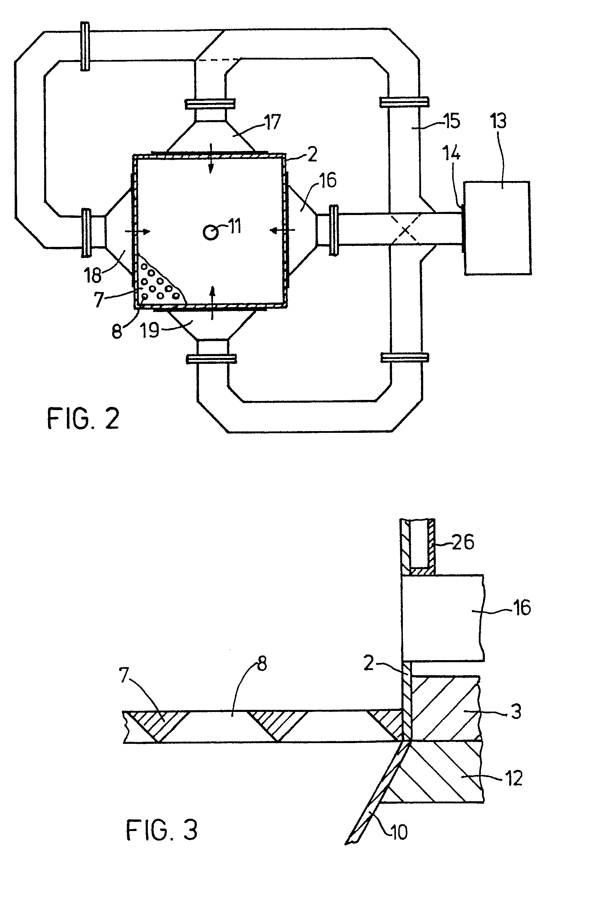

schmelzbehälters ist eine als Rost wirkende Lochplatte 7 eingesetzt und mit den Behälterwänden 2 fest verbunden, vorzugsweise verschweißt. Die Lochplatte 7 besteht aus VA-Stahl und weist über ihre ganze Fläche hinweg eine Vielzahl von Öffnungen oder Bohrungen 8 auf, die in versetzter Anordnung eng beieinander liegen. Wie aus Fig. 3 ersichtlich ist, sind die Bohrungen 8 nach unten hin konisch so angesenkt, daß sich zur Oberseite hin scharfe Kanten mit spitzen Winkeln bilden. Vorzugsweise beträgt der Durchmesser der einzelnen Bohrungen an der Oberseite der Lochplatte 4 bis 10 mm.

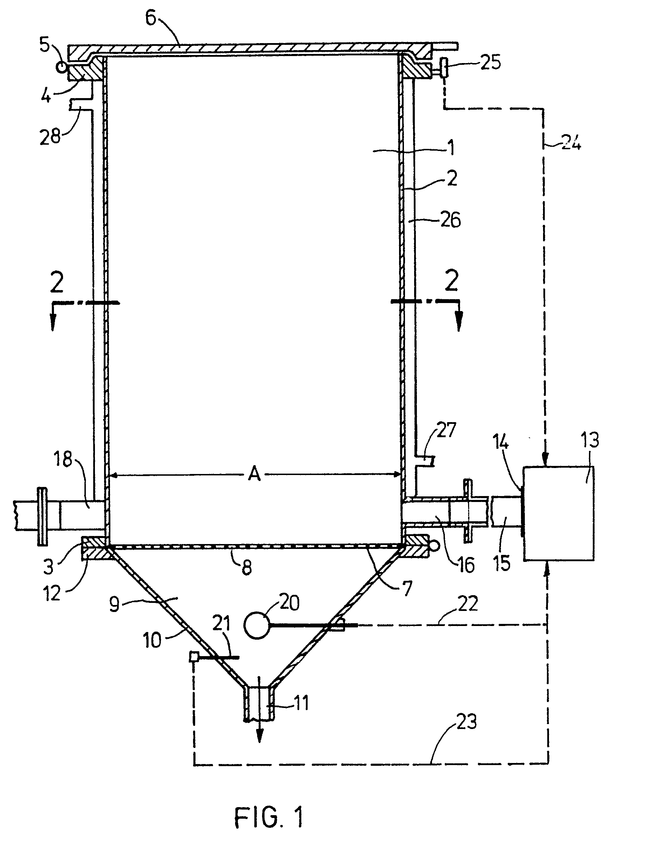

Unter dem Aufschmelzbehälter 1 befindet sich ein Auffangbehälter 9, dessen Wände 10 trichterförmig sind und in ein Ablaufrohr 11 münden, das in Fig. 1 nur teilweise dargestellt ist. Der Auffangbehälter 9 ist mittels eines Flansches 12 am Bodenflansch 3 des Aufschmelzbehälters 1 befestigt.

Zum Aufschmelzen der untersten Schicht der in den Aufschmelzbehälter 1 in erstarrtem Zustand in Form von Brocken oder dergleichen eingebrachten fotografischen Emulsion oder sonstigen wasserhaltigen Masse dient ein Mikrowellengenerator 13. Dieser kann durch ein handelsübliches Magnetron gebildet werden, wobei die Wellenlänge der von dort ausgehenden Mikrowellen z.B. 122,4 mm beträgt.

Der Mikrowellenausgang 14 des Generators 13 ist über ein verzweigtes Hohlleitersystem 15 mit stutzartigen An-

AG 1983

0174587

schlußstücken 16, 17, 18, 19 verbunden, welche in jeweils eine der vier Wände 2 des Aufschmelzbehälters 1 dicht über der Lochplatte 7 eingesetzt sind und sich somit paarweise gegenüber liegen. Nach Bedarf können pro Seitenlänge des Aufschmelzbehälters 1 auch mehrere Anschlußstücke zum Einleiten der Mikrowellen in diesen Behälter vorgesehen werden. Desgleichen können anstelle eines einzigen Mikrowellengenerators 13 auch mehrere derartige Generatoren vorgesehen und mit den einzelnen Anschlußstücken verbunden werden. Wichtig ist, daß die Anschlußstücke etwa in gleicher Höhe in die Wandungen 2 des Aufschmelzbehälters 1 eingesetzt sind.

Die Hohlleiter 15 haben rechteckigen Querschnitt, wobei die kürzeren Rechteckseiten zur Ebene der Lochplatte 7 senkrecht stehen.

In den Auffangbehälter 9 sind ein Niveaufühler 20 und ein Temperaturfühler 21 eingesetzt und über elektrische Leitungen 22, 23 mit dem Mikrowellengenerator 13 verbunden, um den Energiefluß aus dem Generator zu steuern. Dies kann entweder dadurch geschehen, daß der Generator wechselweise an- und abgeschaltet wird, oder auch dadurch, daß seine Leistung verändert wird, oder durch eine Kombination beider Maßnahmen.

Unabhängig davon ist der Mikrowellengenerator 13 aus Sicherheitsgründen auch über die elektrische Verbindung 24 durch einen Näherungsinitiator 25 abschaltbar, der beim Öffnen des Deckels 6 wirksam wird.

AG 1983

Die Seitenlänge A des Aufschmelzbehälters und die Wellenlänge der vom Mikrowellengenerator 13 ausgehenden Mikrowellen sind so aufeinander abgestimmt, daß die Seitenlänge A einem ganzzahligen Vielfachen der halben Wellenlänge dieser Mikrowellen entspricht.

Der über den Anschlußstücken 16, 17, 18, 19 liegende Bereich des Aufschmelzbehälters 1 ist außen von einem Kühlmantel 26 umgeben. Zum Zu- und Abführen des Kühlmittels sind Anschlußstutzen 27, 28 vorgesehen.

Das erfindungsgemäße Verfahren läuft folgendermaßen ab.

Nach dem Öffnen des Deckels 6, welches über den Näherungsinitiator 25 die Abschaltung des Mikrowellengenerators 13 bewirkt, wird die in Form von Brocken, Fladen oder dergleichen erstarrte fotografische Emulsion in den Aufschmelzbehälter 1 eingefüllt. Sie liegt auf der Lochplatte 7 auf und schichtet sich darüber maximal bis zur Höhe des Deckelflansches 4. Nach Schließen des Deckels 6 schaltet der Mikrowellengenerator 13 ein. Die von ihm ausgehenden Mikrowellen werden über das Hohlleitersystem 15 zu den Anschlußstücken 16, 17, 18, 19 geführt und treten in Richtung der in Fig. 2 dargestellten Pfeile in die untere Schicht des maximal bis zum Deckel 6 aufgeschütteten Materials ein, die unmittelbar über der Lochplatte 7 gelagert ist und deren Höhe etwa durch die Höhe der Anschlußstücke 16, 17, 18, 19 bestimmt ist. Die Mikrowellenenergie dringt ca. 10 mm tief in die Masse des Schmelzgutes ein und erhöht die Produkttemperatur maximal bis zum Schmelzpunkt, bei fotografischen Emul-

AG 1983

- 8 -

0174587

sionen bis zu einem Temperaturbereich von etwa 37 bis 40°C. Die aufgeschmolzenen Anteile des Schmelzgutes fließen dabei von der Oberfläche der einzelnen Schmelzgutkörper ab und gelangen durch die Bohrungen 8 der Lochplatte 7 in den Auffangbehälter 9, um von dort durch das Abflußrohr 11 über ein nicht dargestelltes Ventil oder eine Pumpe zum jeweiligen Verbraucher geleitet zu werden. Im vorliegenden Fall der Aufschmelzung einer fotografischen Emulsion ist der Verbraucher üblicherweise eine Gießvorrichtung zum Gießen fotografischer Schichten.

Nach Einschalten des Mikrowellengenerators 13 beginnt die Aufschmelzung der Materialschicht über der Lochplatte 7 zunächst lokal begrenzt nahe den Anschlußstücken 16, 17, 18, 19. Von dort aus breitet sich die Aufschmelzung wellenförmig weiter aus. Im brockenweise aufgeschütteten Material werden Tunnel freigeschmolzen, die unter dem Gewicht der darüberliegenden Materialschichten periodisch zusammenbrechen und nach dem Nachrutschen von Material wieder neu entstehen.

Da der Abstand zwischen den Bohrungen 8 der Lochplatte 7 nur so groß bemessen ist, daß sie das Gewicht des über ihr aufgeschichteten Schmelzgutes zu tragen vermag, wird ein Rückstau und somit eine längere Verweilzeit der geschmolzenen Emulsion in der Mikrowellen-Energiezone vermieden und somit eine unerwünschte Temperaturerhöhung ausgeschlossen. Ferner wird durch die konische Formgebung für die Bohrungen 8 der Lochplatte 7 und durch die hierdurch bedingte Ausbildung

AG 1983

spitzer Winkel an den oberen Kanten der zwischen den Bohrungen 8 verbleibenden Stege der Lochplatte 7 vermieden, daß das geschmolzene Material an der Lochplatte längere Zeit haftet und dadurch in unerwünschter Weise weiter erwärmt wird. Gleichzeitig gewährleistet die Lochplatte 7 eine sichere Mikrowellen-Energieabschirmung zum Auffangbehälter 9, so daß sich das dort ansammelnde geschmolzene Material bereits außerhalb der Mikrowellen-Energiezone befindet.

Andererseits ist die Mikrowellen-Energiezufuhr durch die Anordnung der Anschlußstutzen 16, 17, 18, 19 auch nach oben hin im wesentlichen auf die Höhe dieser Anschlußstutzen begrenzt. Damit ist gewährleistet, daß das aufzuschmelzende Produkt nur in dieser Zone Energie aufnimmt, erwärmt und lokal aufgeschmolzen wird. Hingegen bleibt das in den darüberliegenden Schichten aufgestapelte Schmelzgut ohne wesentliche Erwärmung im erstarrten Zustand, bis es in die Energiezone in der durch die Höhe der Anschlußstutzen 16, 17, 18, 19 bestimmten Schicht nachrutscht.

Bei besonders temperaturempfindlichen Emulsionen kann die Temperatur der Vorratsschichten über der Mikrowellen-Energiezone durch den Kühlmantel 26 auf einer gewünschten Temperatur gehalten werden.

Für den kontinuierlichen Betrieb wird die Aufschmelzleistung in Abhängigkeit von dem an das Abflußrohr 11 angeschlossenen Verbraucher über den Niveaufühler 20 und den Temperaturfühler 21 gesteuert.

AG 1983

Durch das erfindungsgemäße Verfahren wird sichergestellt, daß kein Teilchen des aufzuschmelzenden Produktes wesentlich über die Schmelztemperatur hinaus erwärmt wird. Gleichzeitig wird erreicht, daß die Verweilzeit des Materials in der Schmelzzone außerordentlich kurz ist.

Das erfindungsgemäße Verfahren und die erfindungsgemäße Vorrichtung eignen sich nicht nur zum Aufschmelzen von fotografischen Emulsionen, sondern auch zum Aufschmelzen anderer wasserhaltiger Produkte und Gelmassen, z.B. im Bereich der Lebensmittel.

Hierzu 2 Blatt Zeichnungen.

AG 1983

-11-

Patentansprüche

1. Verfahren zum Aufschmelzen von erstarrten Gelmassen,
   insbesondere fotografischen Emulsionen, die in Feststoff-Formen beliebiger Gestalt in einen mit einer
   Temperiervorrichtung ausgestatteten Aufschmelzbehälter mit einem Öffnungen aufweisenden Boden eingebracht werden, wobei die Gelmasse nach dem Aufschmelzen durch die Öffnungen des Bodens in einen
   darunter angeordneten Auffangbehälter fließt, dadurch gekennzeichnet, daß die unmittelbar über dem
   Boden des Aufschmelzbehälters angeordnete Schicht
   der Gelmasse mittels Mikrowellen geschmolzen wird
   und die darüberliegenden Schichten der Gelmasse
   von der Mikrowellenstrahlung weitgehend unbeeinflußt bleiben.

2. Verfahren nach Anspruch 1, dadurch gekennzeichnet,
   daß die Mikrowellen durch im wesentlichen parallel
   zum Boden des Aufschmelzbehälters verlaufende
   Energieleiter an die Schmelzschicht herangeführt
   werden.

3. Verfahren nach Anspruch 2, dadurch gekennzeichnet,
   daß die Mikrowellen an die Schmelzschicht von mehreren
   Seiten her herangeführt werden, vorzugsweise von gegenüberliegenden Seiten.

A-G 1983-EP

4. Verfahren nach einem der vorangehenden Ansprüche, dadurch gekennzeichnet, daß in Abhängigkeit der Menge der aus dem Auffangbehälter abfließenden Schmelze und/oder in Abhängigkeit von der Temperatur der Schmelze im Auffangbehälter der Energiefluß aus dem die Mikrowellen erzeugenden Generator gesteuert wird.

5. Verfahren nach einem der vorangehenden Ansprüche, dadurch gekennzeichnet, daß die über der Schmelzschicht bevorratete Gelmasse im Aufschmelzbehälter auf etwa konstanter Temperatur gehalten wird, vorzugsweise durch Kühlung.

6. Vorrichtung zur Durchführung des Verfahrens nach einem der vorangehenden Ansprüche, dadurch gekennzeichnet, daß der Aufschmelzbehälter (1) im Bereich der Schmelzschicht einen rechteckigen, vorzugsweise quadratischen Querschnitt aufweist und seine Seitenlängen einem ganzzahligen Vielfachen der halben Wellenlänge der verwendeten Mikrowellen entsprechen.

7. Vorrichtung nach Anspruch 6, dadurch gekennzeichnet, daß der Boden des Aufschmelzbehälters durch eine mit den Seitenwänden (2) verbundene, vorzugsweise verschweißte, vorzugsweise aus Metall bestehende Lochplatte (7) gebildet ist.

8. Vorrichtung nach Anspruch 6, dadurch gekennzeichnet, daß sich die Öffnungen (8) der Lochplatte (7) in Richtung zu einem darunter angeordneten Auffangbehälter (9) vorzugsweise konisch erweitern.

9. Vorrichtung nach einem der Ansprüche 7 und 8, dadurch gekennzeichnet, daß die an den Mikrowellengenerator (13) angeschlossenen Energieleitungen dicht über der Lochplatte (7) in den Aufschmelzbehälter (1) münden, vorzugsweise an gegenüberliegenden Seiten.

10. Vorrichtung nach Anspruch 9, dadurch gekennzeichnet, daß die Energieleitungen aus Rechteckhohlleitern (15) bestehen, deren kürzere Seitenlängen vertikal zur Ebene des Bodens des Aufschmelzbehälters (1) angeordnet sind.

11. Vorrichtung nach einem der vorangehenden Ansprüche, dadurch gekennzeichnet, daß der Mikrowellengenerator (13) in an sich bekannter Weise durch einen im Auffangbehälter (9) angeordneten Niveaufühler an- und abschaltbar ist.

A-G 1983-EP

12.  Vorrichtung nach einem der vorangehenden Ansprüche 9 bis 19, dadurch gekennzeichnet, daß die abgegebene Leistung des Mikrowellengenerators (13) durch einen im Auffangbehälter (9) angeordneten Temperaturfühler (21) steuerbar ist.

13.  Vorrichtung nach einem der vorangehenden Ansprüche 9 bis 21, dadurch gekennzeichnet, daß der Aufschmelzbehälter im Bereich über der Schmelzschicht einen Kühlmantel (26) aufweist.

FIG. 1

A-G 1983

FIG. 2

FIG. 3

A-G 1983